# EUROPÄISCHE PATENTSCHRIFT

(11) **EP 0 085 441 B1**
(45) Veröffentlichungstag und Bekanntmachung des Hinweises auf die Patenterteilung: **16.06.1993**
(21) Anmeldenummer: 83103014.3
(22) Anmeldetag: 26.03.1983
(51) Int. Cl.: G11B 27/10, G11B 15/46, G11B 27/02, G03B 31/00

(54) **Vorrichtung zum Montieren von Videobändern**
Device for mounting video tapes
Appareil pour monter des bandes vidéo

(43) Veröffentlichungstag der Anmeldung: 10.08.1983
(73) Patentinhaber: W. Steenbeck & Co. (GmbH & Co.), D-22089 Hamburg (DE)
(72) Erfinder: Otto, Wolf-Rüdiger, D-2200 Elmshorn (DE); Behrens, Joachim, D-2000 Hamburg 71 (DE)
(74) Vertreter: Niedmers, Ole, Dipl.-Phys.

(56) Entgegenhaltungen:
- DE-A- 1 449 314
- DE-A- 2 245 800
- DE-B- 1 096 404
- US-A- 3 230 307
- US-A- 3 995 946
- THE BKSTS JOURNAL, Band 64, Nr. 5, Mai 1982, Seiten 222,223,225, London, GB
- THE BKSTS JOURNAL, Band 63, Nr. 11, November 1981, Seiten 686-688, London, GB

## Beschreibung

Die Erfindung betrifft eine Vorrichtung zum Montieren von Videobändern mit wenigstens einer Einrichtung zum Antrieb des Videobandes sowie wenigstens einer zusätzlich gesonderten Tonspur.

Seit langer Zeit sind Vorrichtungen bekannt, die unter dem Begriff Bild- und Tonschneidetische zusammengefaßt dazu dienen, einzelne oder mehrere Filmbänder und einzelne oder mehrere Tonbänder zu betrachten bzw. abzuhören und auf gewünschte Weise einander zuzuordnen bzw. zu kombinieren. Der Behandlung auf diesen bekannten Bild- und Tonschneidetischen ging in der Regel die getrennte Aufnahme des Bildmaterials mit einer Kamera und einer gleichzeitigen Aufnahme des Tones mit herkömmlichen Tonaufnahmevorrichtungen voraus. Dem mit einer Filmkamera auf einem Bildträger aufgenommenen Bild wurde nach der Entwicklung auf dem Bild- und Tonschneidetisch der auf einem separaten Tonträger aufgenommene Ton auf geeignete Weise synchron zugeordnet.

Von besonderer Wichtigkeit war bei diesen bekannten Vorrichtungen, daß sowohl während des normalen Laufes des Filmbandes und des Tonbandes mit konstanter Geschwindigkeit als auch bei beschleunigtem Lauf des Filmbandes und des Tonbandes ein großmöglicher synchroner Lauf erreicht werden muß, so daß insgesamt ein Schlupf zwischen beiden Bändern vernachlässigbar klein gehalten werden muß. Zur Erreichung eines in allen Betriebszuständen synchronen Laufes zueinander war es bei Verwendung herkömmlichen Filmmaterials besonders hilfreich, daß die Transportperforation des herkömmlichen Filmmaterials als Bezugsgröße zur Erfassung des synchronen Laufes des anderen Bandes und einer anschließenden Nachregelung zur Herstellung des synchronen Laufes herangezogen werden konnte.

In zunehmendem Maße tritt jedoch eine andere Methode der Aufnahmetechnik zur Aufnahme von Bildern neben die Aufnahmetechnik mit herkömmlichen Filmen betriebenen mechanischen Kameras, nämlich die Aufnahme von Bildern mit sogenannten Videokameras. Gänzlich unterschiedlich zu den bisher verwendeten Filmaufnahmematerialien wird das mit einer Videokamera aufgenommene Bild auf Magnetbändern aufgenommen, die in bezug auf ihren grundsätzlichen Aufbau den schon seit langen Zeiten bekannten Magnetbändern zur Aufnahme von Tönen ähnlich sind. In der Regel zeichnen sich die zur Bildaufzeichnung mit Videokameras verwendeten Videobänder dadurch aus, daß sie im Gegensatz zum herkömmlichen Filmmaterial zur Verwendung in mechanischen Kameras keine Transportperforation aufweisen. Sollen beispielsweise die aufgenommenen Videobänder mit anderen Videobändern oder einem oder mehreren anderen auf Tonbändern aufgenommenen Tonaufzeichnungen kombiniert werden, ist ein hochpräziser synchroner Lauf der einzelnen Bänder relativ zueinander bei allen Betriebszuständen unabdingbare Voraussetzung für die praktische Brauchbarkeit der als Bild- und Tonschneidetisch eingesetzten Vorrichtung.

Zur Gewährleistung eines exakten synchronen Laufes zwischen einem oder mehreren Videobändern sowie einem oder mehreren Tonbändern und einem oder mehreren gesonderten Bildbändern sind bisher Maßnahmen ergriffen worden, die sich durch äußerst aufwendige, rein mit elektronischen Methoden arbeitende Systeme auszeichnen, bekannt geworden, die von dem eigentlichen Bild-und Tonschneidetisch entfernt angeordnet waren und sich auf äußerst nachteilige Weise dadurch auszeichnen, daß sie zum einen große Ungenauigkeiten im Gleichlauf, sogenannte statische oder dynamische Versätze, zwischen den einzelnen Bändern zeigten und zum anderen äußerst kompliziert in der Bedienung sind. Gerade das hatte zur Folge, daß der Bediener eines auf diese Weise mit externen elektronischen Systemen versehenen Bild- und Tonschneidetisches sich zwangsläufig von den bisher für die herkömmlichen Bild- und Tonschneidetische geltenden Arbeitsmethoden und klassischen Bearbeitungsverfahren beträchtlich entfernte, so daß dieser Arbeitsplatz nur noch mit speziell geschultem Bedienungspersonal unter Aufgabe der herkömmlichen Arbeitsmethoden der klassischen Bearbeitungsverfahren besetzt werden konnte.

Es ist Aufgabe der vorliegenden Erfindung, eine Vorrichtung zu schaffen, mit der unter Verwendung von Videofilmen als Bildträgerausgangsmaterial ein hochsynchroner Lauf relativ zu einem oder mehreren gesonderten Tonbändern und bzw. oder einem oder mehreren gesonderten Bildbändern mit einfachen Mitteln erreicht wird, und daß darüber hinaus alle Arbeitsmethoden der klassischen Bearbeitungsverfahren im Bild- und Tonschnitt, wie sie bisher nur bei herkömmlichen, mechanisch aufgenommenen Filmen erreichbar waren, erhalten bleiben.

Gelöst wird die Aufgabe gemäß der Erfindung durch eine Vorrichtung zum Montieren von Videobändern mit wenigstens einer Einrichtung zum Antrieb des Videobandes, die Synchronisationssignale oder entsprechende andere Bandpositionsmarken liefert, sowie wenigstens einer Einrichtung zum Antrieb eines zusätzlichen gesonderten Tonträgers und einem gemeinsamen Hauptantriebsmotor, wobei ein synchroner Lauf der Informationsträger relativ zueinander bei allen Betriebszuständen der Vorrichtung (Stillstand, positive Beschleunigung, gleichmäßige Bandgeschwindigkeit, negative Beschleunigung, Stillstand; und bei beliebig wechselnden Bandtransportrichtungen) durch eine in Form einer zweigeteilten Welle ausgebildeten Antriebskopplung bewirkt wird, deren erste Teilwelle die Videobandantriebseinrichtung und deren zweite Teilwelle die Tonspurträgerantriebseinrichtung fortwährend antreibt, wobei die zweite Teilwelle starr mit dem Hauptantriebsmotor gekoppelt ist und die beiden Teilwellen über eine mechanische Nachstelleinrichtung miteinander gekoppelt sind, wobei mittels einer Drehzahlerfassungseinrichtung die Geschwindigkeit und die Beschleunigung der zweiten Teilwelle erfaßt werden und diesen beiden Größen entsprechende Signale in einer Nachstellsteuerungseinrichtung mit den von der Videoantriebseinrichtung gelieferten Signalen verglichen werden, wobei das Ausgangssignal der Nachstellsteuerungseinrichtung so auf die Nachstelleinrichtung einwirkt, daß die Positionsdifferenz der Informationsträger auf ein Minimum gebracht wird.

Bei einer weiteren Lösung der Aufgabe wird eine Vorrichtung zum Montieren von Videobändern mit wenigstens einer Einrichtung zum Antrieb des Videobandes vorgeschlagen, die Synchronisationssignale oder entsprechende andere Bandpositionsmarken liefert, sowie wenigstens einer Einrichtung zum Antrieb eines zusätzlichen gesonderten Tonspurträgers, und mit zwei gesonderten Antriebsmotoren, wobei ein synchroner Lauf der Informationsträger relativ zueinander bei allen Betriebszuständen der Vorrichtung (Stillstand, positive Beschleunigung, gleichmäßige Bandgeschwindigkeit, negative Beschleunigung, Stillstand; und bei beliebig wechselnden Bandtransportrichtungen) durch eine Antriebskopplung bewirkt wird, die darin besteht, daß der erste Antriebsmotor über eine starr gekoppelte Welle fortwährend die Tonspurträgerantriebseinrichtung antreibt und daß der zweite Antriebsmotor fortwährend die Videobandantriebseinrichtung über eine zweigeteilte Welle antreibt, deren beide Teilwellen über eine mechanische Nachstelleinrichtung gekoppelt sind, wobei mittels einer Drehzahlerfassungseinrichtung die Geschwindigkeit und die Beschleunigung der starr gekoppelten Welle erfaßt werden und diesen beiden Größen entsprechende Signale in einer Nachstellsteuerungseinrichtung mit den von der Videoantriebseinrichtung gelieferten Signalen verglichen werden, wobei das Ausgangssignal der Nachstellsteuerungseinrichtung so auf die Nachstelleinrichtung einwirkt, daß die Positionsdifferenz der Informationsträger auf ein Minimum gebracht wird.

Der Vorteil dieser antriebsgekoppelten Verbindung liegt darin, daß auf gesonderte elektronische Einrichtungen zur Steuerung der Einrichtung zum Antrieb des Videobandes und zur Steuerung des Antriebes der gesonderten Tonspur zum Zwecke eines präzisen Gleichlaufes verzichtet werden kann. Die antriebsgekoppelte Verbindung kann dabei in der Vorrichtung, also im eigentlichen Bild-und Tonschneidetisch angeordnet sein, so daß gesonderte außerhalb der Vorrichtung anzuordnende Geräteteile entfallen, wobei ebenfalls deren gesonderte Bedienung entfällt, so daß die bisher üblichen Arbeitsweisen an Bild- und Tonschneidetischen bei dieser Vorrichtung erhalten bleiben.

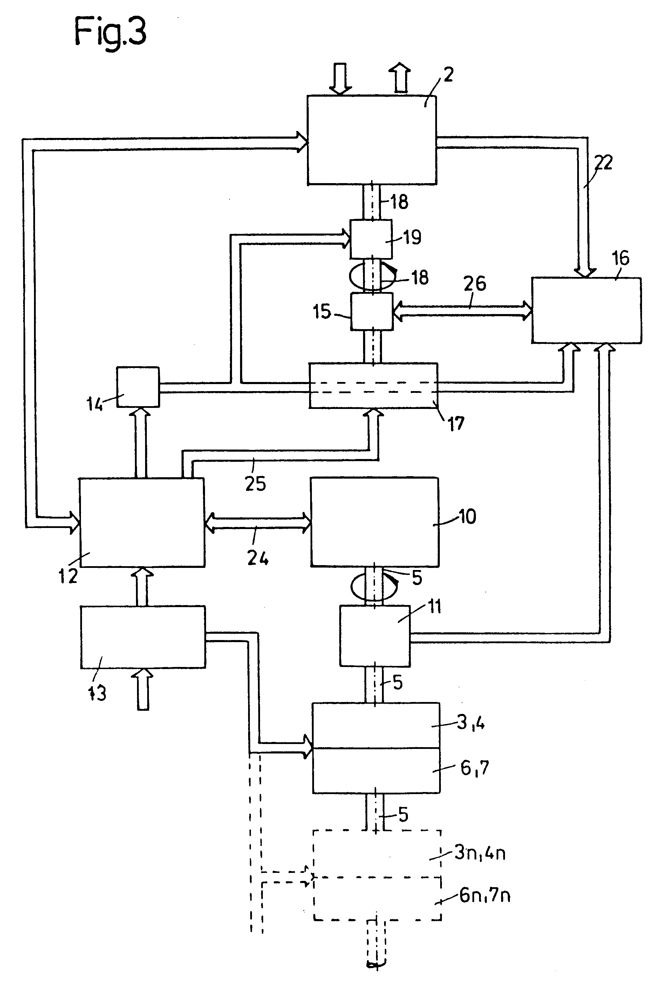

An sich ist eine Vorrichtung bekannt (US-A-3 230 307), mit der der Lauf von Aufzeichnungsträgern in Aufzeichnungs- und Wiedergabevorrichtungen während der Anlaufphase synchronisiert werden soll. Ist nach Abschluß der Anlaufphase eine vorbestimmte Normalgeschwindigkeit erreicht, wird bei der elektromechanischen Ausführungsform nach Fig. 3 ein Kopplungsmotor, der andere Aufzeichnungs- und Wiedergabegeräte antreibt, abgekoppelt und ein sogenannter Normal betrieb der Vorrichtung eingeschaltet, bei dem die Antriebsvorrichtung des einen Aufzeichnungsträgers von der Antriebsvorrichtung des anderen Aufzeichnungsträgers gelöst wird und eine Synchronisation beider Aufzeichnungsträger einer sogenannten zeitstabilen Steuerung überlassen wird.

Vorzugsweise ist die Vorrichtung so ausgebildet, daß wenigstens ein Antrieb eines zusätzlichen gesonderten Bildspurträgers mit dem Antriebsmotor zum Antrieb des Tonspurträgers antriebsgekoppelt verbunden ist. Unabhängig davon, ob das in der oder den gesonderten Bildspuren verwendete Bandmaterial mit einer Antriebsperforation versehen ist oder nicht, kann durch das Vorsehen der antriebsgekoppelten Verbindung auch mit diesen gesonderten Bildspuren ein in hohem Maße präzises Gleichlaufverhalten zwischen allen drei grundsätzlichen Informationsträgern geschaffen werden.

Gemäß einer weiteren vorteilhaften Ausführungsform ist die antriebsgekoppelte Verbindung derart ausgebildet, daß sowohl der Antrieb des gesonderten Tonspurträgers als auch der Antrieb des gesonderten Bildspurträgers in Kombination miteinander antriebsgekoppelt mit dem Antriebsmotor des Tonspurträgers verbunden sind. Eine derartige Ausbildung ist besonders dann geeignet, wenn Tonspur und Bildspur auf einem einzigen Informationsträger aufgebracht sind, oder, wenn insbesondere zwischen dieser gesonderten Tonspur und dieser gesonderten Bildspur ein hochsynchroner Betrieb zueinander und relativ zur Einrichtung zum Antrieb des Videobandes gefordert wird.

Die Erfindung wird nun unter Berücksichtigung der nachfolgenden Zeichnungen anhand eines Ausführungsbeispiels eingehend beschrieben. Darin zeigen:
Fig. 1 in schematischer perspektivischer Darstellung die erfindungsgemäße Vorrichtung mit einer Einrichtung zum Antrieb des Videobandes sowie zwei er gesonderter Bandspuren sowie deren teilweise dargestellte Antriebe,
Fig. 2 in schematischer Darstellung eine mechanisch ausgebildete antriebsgekoppelte Verbindung der einzelnen Antriebskomponenten der Vorrichtung sowie deren Zusammenwirken mit Steuer- und Bedienungseinrichtungen und
Fig. 3 den schematischen Aufbau der in Fig. 2 dargestellten Vorrichtung, jedoch mit getrennten mechanischen antriebsgekoppelten Verbindungen und gesondertem Antrieb der Einrichtung zum Antrieb des Videobandes.

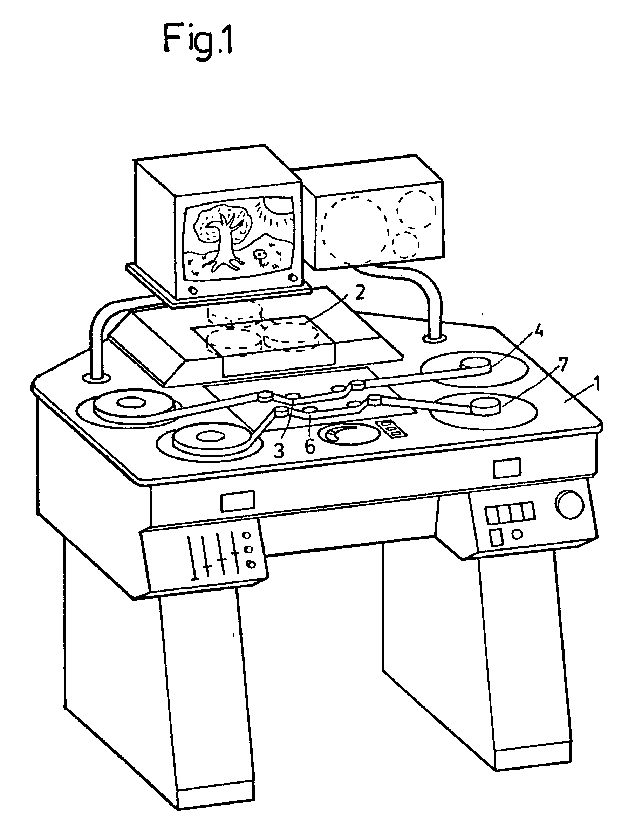

Die in Fig. 1 dargestellte Vorrichtung 1 zum Montieren von Videobändern ist in dieser Darstellung in Form eines Bild- und Tonschneidetisches ausgebildet. Die erfindungsgemäße Vorrichtung 1 kann darüber hinaus auch in Projektoren oder Aufnahme- und Wiedergabegeräten eingesetzt werden, soweit es auf den präzisen Gleichlauf der einzelnen Spuren relativ zueinander ankommt. In der hier dargestellten Ausführungsform besteht die Vorrichtung 1 lediglich aus einer Einrichtung 2 zum Antrieb des Videobandes, die im allgemeinen auch mit Videolaufwerk bezeichnet wird, sowie einer Einrichtung 3 zum Antrieb der gesonderten Tonspur 4 und einer Einrichtung 6 zum Antrieb der gesonderten Bildspur 7. Die hier mit 7 bezeichnete gesonderte Bildspur kann allerdings auch als gesonderte Tonspur ausgebildet sein, während die gesonderte Tonspur 4 auch als gesonderte Bildspur ausgebildet sein kann. Ebenso ist die Gesamtanzahl der Spuren, die im vorliegenden Falle lediglich aus zwei Spuren 4 und 7 neben der aus dem Videoband gebildeten Spur gebildet wird, nahezu unbegrenzt erweiterbar. Im übrigen umfaßt die Vorrichtung 1 verschiedene Bedienungs- und Eingabeelemente zur Steuerung des gesamten Bearbeitungsvorganges sowie Sichtgeräte zur Kontrolle der Bildinformationen enthaltenden Bänder sowie Lautsprecher und Verstärkereinrichtungen zur Wiedergabe der auf den Bändern befindlichen Töne.

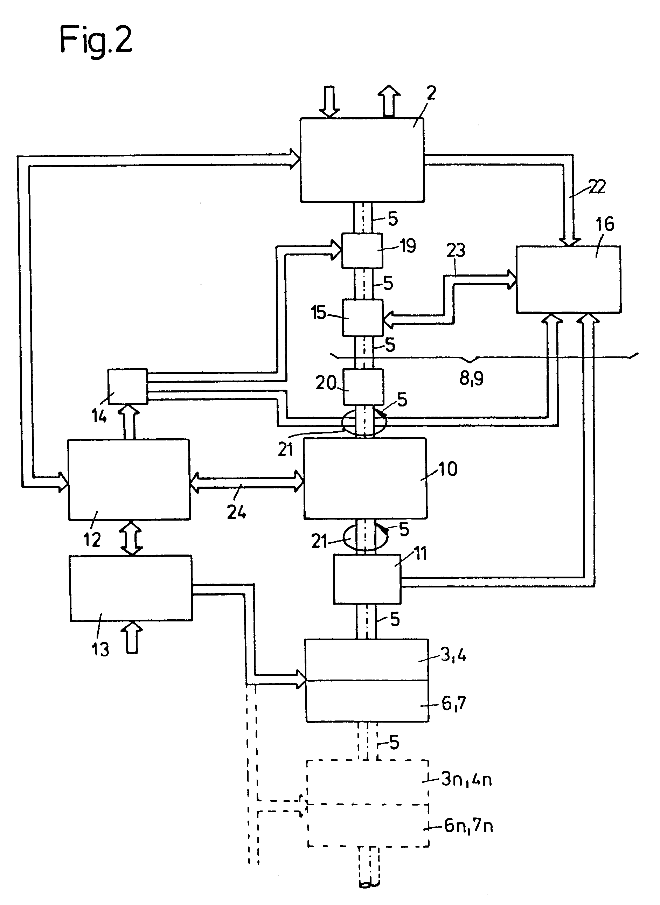

Anhand des in Fig. 2 dargestellten schematischen mechanischen Aufbaus der einzelnen Komponenten der Vorrichtung 1 sind die erfindungsgemäßen konstruktiven Eigenschaften sichtbar, die den angestrebten präzisen Gleichlauf zwischen den einzelnen Bandspuren ermöglichen.

Die Vorrichtung 1 zum Montieren der Videobänder besteht im wesentlichen aus einer Einrichtung 2 zum Antrieb des Videobandes, einem Hauptantriebsmotor 10 sowie einer Einrichtung 3 zum Antrieb der gesonderten Tonspur 4 und einer Einrichtung 6 zum Antrieb der gesonderten Bildspur 7. In der hier dargestellten Ausführungsform ist die Einrichtung 2 zum Antrieb des Videobandes über den Hauptantriebsmotor 10 mit der Einrichtung 3 zum Antrieb der gesonderten Tonspur 4 und der Einrichtung 6 zum Antrieb der gesonderten Bildspur 7 über eine antriebsgekoppelte Verbindung 5 verbunden. Diese dem gemeinsamen Antrieb aller anzutreibenden Komponenten dienende Verbindung 5 ermöglicht den angestrebten Gleichlauf aller Antriebseinrichtungen der Vorrichtung 1.

Zu diesem grundsätzlichen Aufbau treten noch zusätzliche Komponenten hinzu. Diese Komponenten sind im wesentlichen eine Bremsen- und Kupplungseinrichtung 19, die mit der antriebsgekoppelten Verbindung 5 zwischen der Einrichtung 2 zum Antrieb des Videobandes und dem Hauptantriebsmotor 10 angeordnet ist. Daneben umfaßt die Vorrichtung 1 eine als Stellglied ausgebildete Nachsteuerungseinrichtung 15, die mit einer Nachsteuerungsregelungseinrichtung 16 zusammenwirkt. Nachsteuerungseinstelleinrichtung 15 und Nachsteuerungsregelungseinrichtung 16 bilden insgesamt eine Schlupfkompensationseinrichtung zum Ausgleich der Gleichlauffehler zwischen den Spuren.

Zwischen der Einrichtung 2 zum Antrieb des Videobandes und der Hauptantriebseinrichtung 10 kann schließlich noch ein Zwischengetriebe 20 mit der antriebsgekoppelten Verbindung 5 in Verbindung stehen.

Zwischen dem Hauptantriebsmotor 10 und der Einrichtung 3 zum Antrieb der gesonderten Tonspur 4 und der Einrichtung 6 zum Antrieb der gesonderten Bildspur 7 steht mit der antriebsgekoppelten Verbindung 5 eine Drehzahlerfassungseinrichtung 11 in Verbindung, die die Geschwindigkeit und die Beschleunigung der antriebsgekoppelten Verbindung 5 erfaßt und auf die Nachsteuerungsregelungseinrichtung 16 in Form geeigneter Informationen liefert. Um anzudeuten, daß die Vorrichtung 1 nicht lediglich eine einzige Einrichtung 3 zum Antrieb der gesonderten Tonspur 4 und eine einzige Einrichtung 6 zum Antrieb der gesonderten Bildspur 7 umfaßt, sondern mit der antriebsgekoppelten Verbindung 5 eine beliebige Zahl n von Einrichtungen 3 zum Antrieb der Tonspur und Einrichtungen 6 zum Antrieb der Bildspur angetrieben werden können, ist durch die gestrichelte Darstellung von Fig. 2 eine weitere Einrichtung 3n zum Antrieb der gesonderten Tonspur 4n sowie eine weitere Einrichtung 6n zum Antrieb der gesonderten Bildspur 7n symbolisch dargestellt.

Neben diesen unmittelbar mit der antriebsgekoppelten Verbindung 5 zusammenwirkenden Komponenten der Vorrichtung 1 umfaßt diese darüber hinaus eine Antriebssteuerungs- und - regelungseinrichtung 12, eine Einrichtung zur Drehmomentüberwachung und Drehmomentrichtungsbestimmung 13 sowie eine Bandrißüberwachungseinrichtung 14. Durch den von unten auf die Einrichtung zur Drehmomentüberwachung und Drehmomentbestimmung 13 einwirkenden Pfeil ist dargestellt, daß an dieser Stelle vom Bedienungspersonal der Vorrichtung 1 Kommandos in bezug auf Laufgeschwindigkeiten der Spuren sowie Richtungskommandos und andere Befehle eingegeben werden können.

Zur Kompensation eines Schlupfes zwischen der das Videoband antreibenden Einrichtung 2 und der jeweiligen Position der gesonderten Tonspur 4 und der gesonderten Bildspur 7 bzw. der gesonderten Tonspuren 4n und der gesonderten Bildspuren 7n werden in der Nachsteuerungsregelungseinrichtung 16 die von der Einrichtung 2, die durch ein Videolaufwerk gebildet wird, gelieferten Synchronisationsimpulse 22 oder entsprechende andere Bandpositionsmarken mit von einer oder mehreren Bandspuren 4, 4n bzw. 7, 7n verbundenen Drehzahlerfassungseinrichtung 11 so miteinander verknüpft, daß die Differenzen zwischen der Position des Videobandes in der Einrichtung 2 und den Spuren 4, 4n, bzw. 7, 7n über entsprechende Steuerbefehle 23, die auf die Nachsteuerungseinstelleinrichtung 15 einwirken, auf ein Minimum gebracht wurden. Dies geschieht sowohl im Stillstand als auch während des Betriebes der Vorrichtung 1.

Bei der hier beschriebenen Ausführungsform übernimmt der Hauptantriebsmotor 10 über die antriebsgekoppelte Verbindung den Antrieb aller Spuren über die jeweiligen Einrichtungen 3, 6 zum Antrieb der Spuren sowie der Einrichtung 2 zum Antrieb des Videobandes. Der Hauptantriebsmotor 10 besteht dabei aus einem oder mehreren Motoren. Das Zwischengetriebe 20 dient dabei zur geeigneten Drehzahlanpassung zwischen der Einrichtung 2 zum Antrieb des Videobandes und den übrigen Einrichtungen 2, 4 zum Antrieb der gesonderten Tonspur 4 bzw. der gesonderten Bildspur 7 zur Erzielung eines gleichen Bandstreckenzeitverhältnisses. Die Bandrißüberwachungseinrichtung 14 löst bei einem Riß oder einem Verwickeln des Videobandes ein Signal aus, das ein sofortiges Auskuppeln der Einrichtung 2 zum Antrieb des Videobandes zur Folge hat.

Die Einrichtung 2 zum Antrieb des Videobandes, also das eigentliche Videolaufwerk, steht mit äußeren Komponenten der Vorrichtung 1, beispielsweise mit einem in Fig. 1 dargestellten Bildmonitor sowie beispielsweise einer Videokamera in Verbindung. Darüber hinaus steht die Einrichtung 2 mit Tonverstärker und Tonmischeinrichtungen sowie Lautsprechereinrichtungen in Verbindung. Das Zusammenwirken mit diesen äußeren, hier nicht dargestellten Komponenten wird durch die beiden Pfeile dargestellt.

Die in Fig. 3 dargestellte Ausführungsform der erfindungsgemäßen Vorrichtung 1 umfaßt im wesentlichen die gleichen Grundkomponenten, wie die in Fig. 2 dargestellte Ausführungsform. Sie unterscheidet sich jedoch von der vorangehend beschriebenen dadurch, daß in diesem Falle zwischen einem gesonderten Antriebsmotor 17 und der Einrichtung 2 zum Antrieb des Videobandes eine gesonderte antriebsgekoppelte Verbindung 18 geschaffen wird.

Durch Vorsehen der schon im Zusammenhang mit Fig. 2 erläuterten Nachsteuerungseinstelleinrichtung 15, der Nachsteuerungsregelungseinrichtung 16 sowie der Drehzahlerfassungseinrichtung 11 werden sehr gute Gleichlaufeigenschaften zwischen der Einrichtung 2 zum Antrieb des Videobandes und den übrigen Einrichtungen 3, 3n zum Antrieb der gesonderten Tonspuren 4, 4n sowie der Einrichtung 6, 6n zum Antrieb der gesonderten Bildspuren 7, 7n erreicht.

Sowohl bei der in Fig. 2 als auch der in Fig. 3 dargestellten und beschriebenen Ausführungsform ist es denkbar, den Hauptantriebsmotor 10 mit der Einrichtung 2 zum Antrieb des Videobandes über die antriebsgekoppelte Verbindung 5 derart zu verbinden, daß der Hauptantriebsmotor 10 über die Bremsen- und Kupplungseinrichtung 19, dann über die Drehzahlerfassungseinrichtung 11, dann über die Nachsteuerungseinstelleinrichtung 15 und dann über das Zwischengetriebe 20 folgend mit der Einrichtung 2 zum Antrieb des Videobandes antriebsgekoppelt 5 verbunden ist. Die Steuerfunktionen sind denen analog, die in den vorangehend beschriebenen Ausführungsformen ausführlich dargestellt worden sind.

Obwohl hier der Einfachheit wegen zunächst nur eine Tonspur 4, 4n beschrieben wurde, die nur als einkanaliger Informationsträger ausgebildet ist, kann die hier verwendete gesonderte Tonspur 4, 4n selbst wiederum in m verschiedene Tonkanäle unterteilt sein, wobei m dabei eine beliebige natürliche Zahl sein kann.

Das hier beschriebene Videoband weist im allgemeinen keine Perforation auf. Es können aber auch Videobänder in der erfindungsgemäßen Vorrichtung Verwendung finden, die eine Perforation aufweisen, wobei diese Videobänder dann Videofilm genannt werden. Die Perforierung dieser Videofilm genannten Videobänder kann dabei auch entweder nur am oberen Filmrand oder auch am unteren Filmrand, als auch auf bekannte Weise an beiden Rändern ausgebildet sein.

Schließlich kann das in der erfindungsgemäßen Vorrichtung verwendete Videoband in perforierter als auch in nicht perforierter Form neben einem als Bildträger ausgebildeten Bildkanal einen oder mehrere Tonkanäle umfassen.

## Patentansprüche

1. Vorrichtung (1) zum Montieren von Videobändern mit wenigstens einer Einrichtung (2) zum Antrieb des Videobandes, die Synchronisationssignale oder entsprechende andere Bandpositionsmarken liefert, sowie wenigstens einer Einrichtung zum Antrieb (3) eines zusätzlichen gesonderten Tonträgers (4), und einem gemeinsamen Hauptantriebsmotor (10), wobei ein synchroner Lauf der Informationsträger relativ zueinander bei allen Betriebszuständen der Vorrichtung (1) (Stillstand, positive Beschleunigung, gleichmäßige Bandgeschwindigkeit, negative Beschleunigung, Stillstand; und bei beliebig wechselnden Bandtransportrichtungen) durch eine in Form einer zweigeteilten Welle (5) ausgebildeten Antriebskopplung bewirkt wird, deren erste Teilwelle die Videoantriebseinrichtung (2) und deren zweite Teilwelle die Tonspurträgerantriebseinrichtung (3) fortwährend antreibt, wobei die zweite Teilwelle starr mit dem Hauptantriebsmotor (10) gekoppelt ist und die beiden Teilwellen über eine mechanische Nachstelleinrichtung (15) miteinander gekoppelt sind, wobei mittels einer Drehzahlerfassungseinrichtung (11) die Geschwindigkeit und die Beschleunigung der zweiten Teilwelle erfaßt werden und diesen beiden Größen entsprechende Signale in einer Nachstellsteuerungseinrichtung (16) mit den von der Videoantriebseinrichtung (2) gelieferten Signalen verglichen werden, wobei das Ausgangssignal der Nachstellsteuerungseinrichtung (16) so auf die Nachstelleinrichtung (15) einwirkt, daß die Positionsdifferenz der Informationsträger auf ein Minimum gebracht wird.

2. Vorrichtung (1) zum Montieren von Videobändern mit wenigstens einer Einrichtung (2) zum Antrieb des Videobandes, die Synchronisationssignale oder entsprechende andere Bandpositionsmarken liefert, sowie wenigstens einer Einrichtung zum Antrieb (3) eines zusätzlichen gesonderten Tonspurträgers (4), und mit zwei gesonderten Antriebsmotoren (10,17), wobei ein synchroner Lauf der Informationsträger relativ zueinander bei allen Betriebszuständen der Vorrichtung (1) (Stillstand, positive Beschleunigung, gleichmäßige Bandgeschwindigkeit, negative Beschleunigung, Stillstand; und bei beliebig wechselnden Bandtransportrichtungen) durch eine Antriebskopplung bewirkt wird, die darin besteht, daß der erste Antriebsmotor (10) über eine starr gekoppelte Welle (5) fortwährend die Tonspurträgerantriebseinrichtung (3) antreibt und daß der zweite Antriebsmotor (17) fortwährend die Videobandantriebseinrichtung (2) über eine zweigeteilte Welle antreibt, deren beide Teilwellen über eine mechanische Nachstelleinrichtung (15) gekoppelt sind, wobei mittels einer Drehzahlerfassungseinrichtung (11) die Geschwindigkeit und die Beschleunigung der starr gekoppelten Welle (5) erfaßt werden und diesen beiden Größen entsprechende Signale in einer Nachstellsteuerungseinrichtung (16) mit den von der Videoantriebseinrichtung (2) gelieferten Signalen verglichen werden, wobei das Ausgangssignal der Nachstellsteuerungseinrichtung (16) so auf die Nachstelleinrichtung (15) einwirkt, daß die Positionsdifferenz der Informationsträger auf ein Minimum gebracht wird.

3. Vorrichtung nach Anspruch 1 oder 2, dadurch gekennzeichnet, daß wenigstens ein Antrieb (6) eines zusätzlichen gesonderten Bildspurträgers (7) mit dem Antriebsmotor (10) zum Antrieb des Tonspurträgers (4) antriebsgekoppelt verbunden ist.

4. Vorrichtung nach Anspruch 3, dadurch gekennzeichnet, daß die antriebsgekoppelte Verbindung derart ausgebildet ist, daß sowohl der Antrieb (3) des gesonderten Tonspurträgers (4) als auch der Antrieb (6) des gesonderten Bildspurträgers (7) in Kombination miteinander antriebsgekoppelt mit dem Antriebsmotor (10) zum Antrieb des Tonspurträgers (4) verbunden sind.

## Claims

1. An apparatus (1) for editing video tapes, with at least one means (2) for driving the video tape, which delivers synchronising signals or corresponding other tape position markers, and with at least one means (3) of driving an additional separate sound carrier (4), and a common main drive motor (10), synchronous movement of the data carriers in relation to one another in all operating conditions of the apparatus (1) (stop, positive acceleration, steady tape speed, negative acceleration, stop; and in optionally changing tape transport directions) is achieved by a drive coupling constructed in the form of a two-part shaft (5), the first partial shaft steadily driving the video drive means (2) while the second partial shaft continuously drives the sound-track carrier drive means (3), the second partial shaft being rigidly coupled to the main drive motor (10) and the two partial shafts being coupled to each other by a mechanical adjusting means (15) whereby, by means of a rotary speed detecting means (11), the speed and the acceleration of the second partial shaft are detected and signals corresponding to these two variables are in an adjustment control means (16) compared with the signals delivered by the video drive means (2), the output signal from the adjustment control means (16) acting on the readjustment means (15) in such a way that the difference in position of the data carriers is reduced to a minimum.

2. An apparatus (1) for editing video tapes, with at least one means (2) for driving the video tape, which delivers synchronising signals or corresponding other tape position markers, and with at least one means (3) of driving an additional separate sound-track carrier (4), and with two separate drive motors (10, 17), synchronous running of the data carriers in relation to each other in all operating conditions of the apparatus (1) (stop, positive acceleration, steady tape speed, negative acceleration, stop; and in optionally changing tape transport directions) is brought about by a drive coupling which consists in that the first drive motor (10) drives the sound-track carrier drive means (3) through a rigidly coupled shaft (5) while the second drive motor (17) continuously drives the video tape drive means (2) via a two-part shaft, of which the two partial shafts are coupled by a mechanical adjusting means (15), a rotary speed detecting means (11) detecting the speed and acceleration of the rigidly coupled shaft (5) and comparing signals corresponding to these two variables with the signals delivered by the video drive means (2) and in an adjustment control means (16), the output signal from the adjustment control means (16) acting on the adjustment means (15) in such a way that the difference in position of the data carriers is reduced to a minimum.

3. An apparatus according to Claim 1 or 2, characterised in that at least one drive (6) of an additional separate image track carrier (7) is connected to the drive motor (10) for driving the sound-track carrier (4) for transmission of the drive.

4. An apparatus according to Claim 3, characterised in that the transmissively coupled connection is such that both the drive (3) of the separate audio track carrier (4) and also the drive (6) of the separate image track carrier (7) are in combination with each other connected for transmission of drive to the drive motor (10) for driving the sound-track carrier (4).

## Revendications

1. Appareil (1) pour monter des bandes vidéo, comprenant au moins un dispositif (2) pour l'entraînement de la bande vidéo, qui fournit des signaux de synchronisation ou d'autres repères de position de bande correspondants, ainsi qu'au moins un dispositif pour l'entraînement d'un support sonore (4) supplémentaire à part et un moteur d'entraînement principal (10) commun, appareil dans lequel un défilement synchrone des supports d'information l'un par rapport à l'autre est produit, dans tous les modes de fonctionnement de l'appareil (1) (arrêt, accélération positive, vitesse de bande uniforme, accélération négative ou décélération, arrêt; de même que pour des directions de transport de bande changeant de façon aléatoire), par un couplage d'entraînement réalisé sous la forme d'un arbre (5) divisé en deux parties, dont le premier arbre partiel fait tourner de façon continue le dispositif d'entraînement vidéo (2) et dont le second arbre partiel fait tourner de façon continue le dispositif d'entraînement du support de piste sonore (3), le second arbre partiel étant accouplé rigidement au moteur principal (10) et les deux arbres partiels étant accouplés ensemble par un dispositif de rajustement mécanique (15), la vitesse et l'accélération du second arbre partiel étant détectées au moyen d'un dispositif de détection de la vitesse de rotation (11) et des signaux correspondant à ces deux grandeurs étant comparés dans un dispositif de commande de rajustement (16) avec les signaux fournis par le dispositif d'entraînement vidéo (2), le signal de sortie du dispositif de commande de rajustement (16) agissant sur le dispositif de rajustement (15) de manière que la différence de position des supports d'information soit amenée à un minimum.

2. Appareil (1) pour monter des bandes vidéo, comprenant au moins un dispositif (2) pour l'entraînement de la bande vidéo, qui fournit des signaux de synchronisation ou d'autres repères de position de bande correspondants, au moins un dispositif pour l'entraînement (3) d'un support de piste sonore (4) supplémentaire à part, ainsi que deux moteurs d'entraînement (10, 17) séparés, appareil dans lequel un défilement synchrone des supports d'information l'un par rapport à l'autre est produit, dans tous les modes de fonctionnement de l'appareil (1) (arrêt, accélération positive, vitesse de bande uniforme, accélération négative ou décélération, arrêt; de même que pour toutes les directions de transport de bande changeant de façon aléatoire), par un couplage d'entraînement selon lequel le premier moteur d'entraînement fait tourner de façon continue le dispositif d'entraînement du support de piste sonore (3) par l'intermédiaire d'un arbre (5) accouplé rigidement et le second moteur d'entraînement (17) fait tourner de façon continue le dispositif d'entraînement de la bande vidéo 12) par l'intermédiaire d'un arbre divisé en deux parties et dont les deux arbres partiels sont accouplés par un dispositif de rajustement mécanique (15), la vitesse et l'accélération de l'arbre accouplé rigidement étant détectées au moyen d'un dispositif de détection de la vitesse de rotation (11) et des signaux correspondant à ces deux grandeurs étant comparés dans un dispositif de commande de rajustement (16) avec les signaux fournis par le dispositif d'entraînement vidéo (2), le signal de sortie du dispositif de commande de rajustement (16) agissant sur le dispositif de rajustement (15) de manière que la différence de position des supports d'information soit amenée à un minimum.

3. Appareil selon la revendication 1 ou 2, caractérisé en ce qu'au moins un entraînement (6) d'un support de piste image (7) supplémentaire à part est couplé pour l'entraînement avec le moteur (10) servant à l'entraînement du support de piste sonore (4).

4. Appareil selon la revendication 3, caractérisé en ce que la liaison de couplage d'entraînement est réalisée de manière qu'aussi bien l'entraînement (3) du support de piste sonore (4) à part que l'entraînement (6) du support de piste image (7) à part soient couplés pour l'entraînement, en combinaison l'un avec l'autre, avec le moteur (10) servant à l'entraînement du support de piste sonore (4).
